# FASCICULE DE BREVET EUROPEEN

(11) **EP 2 791 734 B1**
(45) Date de publication et mention de la délivrance du brevet: **16.03.2016**
(21) Numéro de dépôt: 12798332.8
(22) Date de dépôt: 11.12.2012
(51) Int. Cl.: G02F 1/39, G02F 1/35

(54) **PROCEDE ET DISPOSITIF D'AMPLIFICATION PARAMETRIQUE OPTIQUE D'IMPULSIONS A DERIVE DE FREQUENCE**
VERFAHREN UND VORRICHTUNG ZUR OPTISCHEN PARAMETRISCHEN VERSTÄRKUNG VON PULSEN MIT FREQUENZDRIFT
METHOD AND DEVICE FOR THE OPTICAL PARAMETRIC AMPLIFICATION OF PULSES WITH FREQUENCY DRIFT

(30) Priorité: 14.12.2011 FR 1161642
(43) Date de publication de la demande: 22.10.2014
(73) Titulaire: Commissariat à l'Énergie Atomique et aux Énergies Alternatives, 75015 Paris (FR); Université Lille 1 - Sciences Et Technologies, 59655 Villeneuve D'ascq Cedex (FR)
(72) Inventeur: HUGONNOT, Emmanuel, 33400 Talence (FR); MUSSOT, Arnaud, 59260 Hellemmes (FR); KUDLINSKI, Alexandre, 59496 Salome (FR)
(74) Mandataire: Ahner, Philippe
(86) Numéro de dépôt international: PCT/EP2012/075123
(87) Numéro de publication internationale: WO 2013/087645

(56) Documents cités:
- EP-A1- 1 626 308
- WO-A1-2010/142920
- US-A1- 2004 042 060
- CAUCHETEUR C ET AL: "Experimental demonstration of optical parametric chirped pulse amplification in optical fiber", OPTICS LETTERS, OSA, OPTICAL SOCIETY OF AMERICA, WASHINGTON, DC, US, vol. 35, no. 11, 1 juin 2010 (2010-06-01), pages 1786-1788, XP001554360, ISSN: 0146-9592, DOI: 10.1364/OL.35.001786 [extrait le 2010-05-19] cité dans la demande
- ZHENGQIAN LUO ET AL: "Multiwavelength Fiber Optical Parametric Oscillator", IEEE PHOTONICS TECHNOLOGY LETTERS, IEEE SERVICE CENTER, PISCATAWAY, NJ, US, vol. 21, no. 21, 1 novembre 2009 (2009-11-01), pages 1609-1611, XP011275691, ISSN: 1041-1135, DOI: 10.1109/LPT.2009.2030778
- ZEROMSKIS E ET AL: "Gain bandwidth broadening of the continuum-seeded optical parametric amplifier by use of two pump beams", OPTICS COMMUNICATIONS, NORTH-HOLLAND PUBLISHING CO. AMSTERDAM, NL, vol. 203, no. 3-6, 15 mars 2002 (2002-03-15), pages 435-440, XP004345650, ISSN: 0030-4018, DOI: 10.1016/S0030-4018(02)01182-3

## Description

### DOMAINE TECHNIQUE

La présente invention concerne un procédé et un dispositif d'amplification paramétrique optique d'impulsions à dérive de fréquence (en anglais, *optical parametric chirped pulse amplification*).

L'invention se rapporte en particulier au domaine des FOPCPA, c'est-à-dire des amplificateurs paramétriques optiques à fibres d'impulsions à dérive de fréquence (en anglais, *fiber optical parametric chirped pulse amplifiers*).

Cette nouvelle génération d'amplificateurs, de par les avantages que proposent les architectures à fibres du point de vue de l'encombrement et de la stabilité, est susceptible de replacer les amplificateurs paramétriques massifs (en anglais, *bulk*) dans certains cas.

L'invention permet d'élargir d'un facteur 2 la bande (spectrale) de gain des FOPCPA et donc d'amplifier des impulsions de très courte durée. Des largeurs de bandes de gain supérieures à celles des fibres dopées aux terres rares pourraient même être obtenues, ce qui ouvrirait la porte à l'amplification d'impulsions à très large bande à l'aide de dispositifs complètement fibrés. Cela s'inscrit directement dans l'évolution des systèmes lasers actuels vers des systèmes complètement fibrés.

L'invention s'applique notamment à l'amplification d'impulsions très courtes, aux procédés d'usinage par laser, aux expériences d'interaction laser-matière et aux télécommunications.

### ÉTAT DE LA TECHNIQUE ANTÉRIEURE

Les FOPA, c'est-à-dire les amplificateurs paramétriques optiques à fibre (en anglais, *fiber optical parametric amplifiers*) ont connu un vif succès il y a quelques années, dans le domaine des télécommunications optiques. En effet, leurs larges bandes de gain représentent un intérêt de premier ordre pour amplifier simultanément les nombreux canaux des signaux multiplexés en longueur d'onde (en anglais, *wavelength division multiplexed signals*).

Ces caractéristiques se révèlent également extrêmement intéressantes pour amplifier des impulsions à large spectre, qui sont étirées temporellement (en anglais, *temporally stretched)* afin de réduire leur puissance-crête (en anglais, *peak power*).

En effet, jusqu'à présent, ces impulsions à dérive de fréquence (en anglais, *chirped pulses*) étaient principalement amplifiées
- soit par émission stimulée dans des matériaux massifs ou des fibres dopées à partir de terres rares,
- soit dans des amplificateurs paramétriques massifs à base de cristaux non-linéaires d'ordre deux (en anglais, *second-order nonlinear crystals*).

Ces dispositifs permettent d'obtenir, après recompression, des impulsions extrêmement puissantes ; ils constituent des sources lasers de choix.

Pour de nombreuses applications, la recherche constante de compacité, de stabilité et de facilité d'alignement privilégie les systèmes lasers à fibres. Mais le principe de fonctionnement de base de ces derniers requiert un stockage de l'énergie de pompe à l'intérieur des fibres, énergie qui est ensuite cédée sous forme d'émission spontanée ou stimulée. Ainsi, un signal de fluorescence est émis sur un temps suffisamment long pour que le rapport signal sur bruit soit dégradé.

Dans le cas d'applications réclamant un excellent contraste, il est possible d'utiliser des amplificateurs paramétriques optiques massifs mais ceux-ci sont relativement complexes à aligner et demeurent très encombrants.

Il y a quelques années, on a donc proposé de réaliser les dispositifs appelés FOPCPA, déjà mentionnés plus haut, pour combiner les avantages des amplificateurs paramétriques optiques et des amplificateurs à fibre (en anglais, *fiber amplifiers*).

Ces travaux théoriques ont rapidement été confirmés par des expériences qui ont été réalisées :
- dans un premier temps, aux longueurs d'ondes des télécommunications avec des signaux picosecondes, par souci de simplicité est pour démontrer la faisabilité de tels dispositifs - voir le document suivant :
   **[1]** C. Caucheteur, D. Bigourd, E. Hugonnot, P. Szriftgiser, A. Kudlinski, M. Gonzalez-Herraez et A. Mussot, "Experimental demonstration of optical parametric chirped pulse amplification in optical fiber", Opt. Lett., vol. 35, N° 11, pp. 1786-1788 (2010**)**
- puis autour de 1 µm avec des impulsions femtosecondes - voir le document suivant :
   **[2]** D. Bigourd, L. Lago, A. Mussot, A. Kudlinski, J.F. Gleyze et E. Hugonnot, "High-gain optical-parametric chirped-pulse amplification of femtosecond pulses at 1 µm", Opt. Lett., vol. 35, N°20, pp. 3480-3482 (2010**).**

Toutes ces démonstrations expérimentales ou théoriques ont été effectuées avec une configuration dégénérée, dans laquelle les photons issus d'une même source de pompe sont cédés à l'onde de signal et à l'onde complémentaire (en anglais, *idler wave*).

Indiquons dès à présent que, dans l'invention, on propose l'utilisation d'une configuration non dégénérée à deux sources de pompe, dans laquelle le support du spectre de l'onde à amplifier contient la moyenne (arithmétique) des fréquences (optiques) des deux sources de pompe, ce qui permet d'élargir la bande passante, ou bande de gain, de l'amplificateur.

Et il est même possible de doubler cette bande passante lorsque l'onde à amplifier est approximativement injectée au centre des deux pompes, c'est-à-dire lorsque le milieu du support de spectre coïncide approximativement avec la moyenne des fréquences.

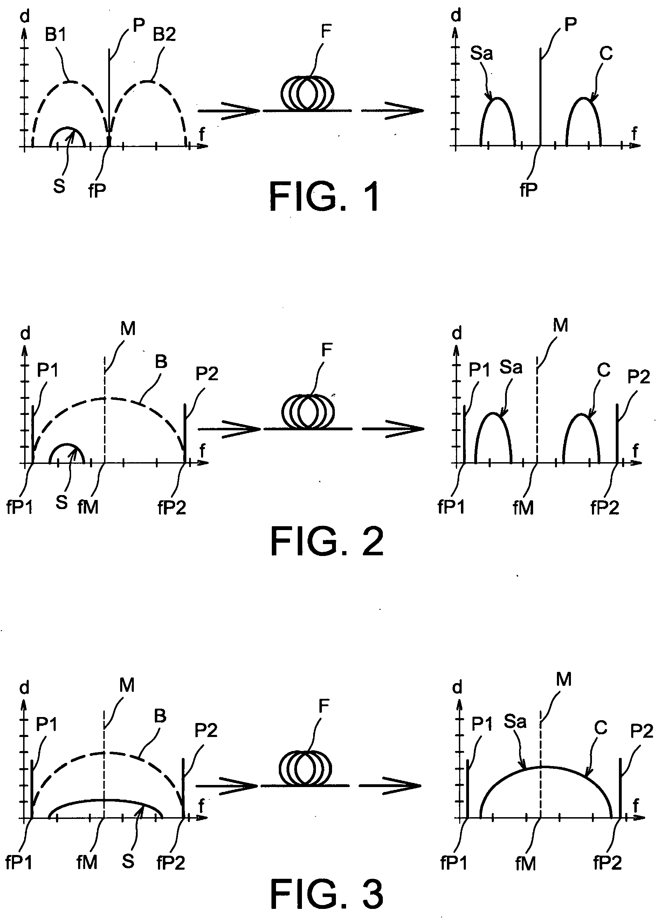

Le principe de fonctionnement des amplificateurs paramétriques à fibre connus est schématiquement illustré sur les figures 1 et 2. Sur ces figures, on a porté la fréquence (optique) f en abscisse et la densité spectrale de puissance d en ordonnée (échelle logarithmique).

Dans le cas dégénéré (figure 1) où il n'y a qu'une pompe (signal de pompe P, de fréquence (optique) fP), le signal S à amplifier est injecté dans la bande de gain B1-B2, du côté des hautes fréquences (B2) ou des basses fréquences (B1). A la sortie de la fibre optique F, on retrouve alors l'onde de signal Sa, qui a été amplifiée au cours de sa propagation dans la fibre, et l'onde complémentaire C qui est symétrique du signal Sa par rapport à la pompe P.

Dans une configuration non-dégénérée (figure 2) où il y a deux pompes (signaux de pompe P1 et P2, de fréquences (optiques) respectives fP1 et fP2, avec fP1 inférieur à fP2), le principe est similaire.

La bande de gain B est alors comprise entre les deux pompes; et l'axe M (correspondant à une fréquence (optique) fM égale à (fP1+fP2)/2), équidistant de P1 et P2, constitue un axe de symétrie pour B.

Le signal à amplifier S est, quant à lui, injecté sur une demi-bande spectrale qui est comprise entre fM et la fréquence de l'une des deux pompes, à savoir fP1 dans l'exemple de la figure 2. Et l'onde complémentaire C est générée sur l'autre demi-bande spectrale, entre fM et fP2 dans l'exemple de la figure 2.

Le principal problème posé par ces configurations réside dans le fait que l'on ne peut généralement utiliser que la moitié de la bande de gain potentielle. En effet, l'autre moitié est réservée à l'onde complémentaire qui est générée au cours de la propagation du signal.

Par ailleurs, l'injection d'ondes des deux côtés (signal et onde complémentaire) est possible dans une configuration dite « sensible à la phase » (et potentiellement capable d'amplifier sans bruit). Mais cela nécessite un contrôle extrêmement délicat de la phase de chacune des ondes mises en jeu, contrôle qu'il est impossible de réaliser de façon stable.

Il est également possible de profiter de la totalité de la largeur de la bande de gain de manière simultanée, en injectant plusieurs ondes monochromatiques dont les décalages spectraux sont ajustés de façon à ce que les ondes complémentaires générées ne se superposent pas - voir le document suivant :
**[3]** A. Durecu, C. Simonneau, A. Mussot, T. Sylvestre, E. Lantz, H. Maillotte, « fiber optical parametric amplifier and method for amplification of optical signals with a fiber optical parametric amplifier », demande de brevet européen EP 1626 308, publiée le 15 février 2006.

Mais cette configuration est limitée à des ondes quasi-monochromatiques. De plus, les intervalles spectraux doivent être laissés « libres » et limitent de ce fait la bande spectrale réellement utilisable.

Compte tenu des limitations techniques imposées par les fibres ou les puissances de pompe, il est donc notamment assez délicat d'amplifier des impulsions possédant un spectre qui s'étend sur plus de 10 nm aux alentours de 1 µm.

### EXPOSÉ DE L'INVENTION

La présente invention a pour but de remédier aux inconvénients précédents.

De façon précise, la présente invention a pour objet un procédé d'amplification paramétrique optique d'impulsions à dérive de fréquence, utilisant un premier signal de pompe, ayant une première fréquence optique, caractérisé en ce qu'on utilise un effet de mélange à quatre ondes entre chaque impulsion à dérive de fréquence, le premier signal de pompe et un deuxième signal de pompe, ayant une deuxième fréquence optique, et en ce que la demi-somme des première et deuxième fréquences optiques appartient au support du spectre des impulsions à dérive de fréquence.

La présente invention a également pour objet un dispositif d'amplification paramétrique optique d'impulsions à dérive de fréquence, comprenant :
- une première source de pompe pour fournir un premier signal de pompe, ayant une première fréquence optique,
- une source d'impulsions lumineuses,
- un étireur (en anglais, *stretcher*) pour étirer temporellement les impulsions lumineuses et fournir ainsi les impulsions à dérive de fréquence, et
- un milieu pour amplifier les impulsions à dérive de fréquence,
caractérisé en ce qu'il comprend en outre une deuxième source de pompe pour fournir un deuxième signal de pompe, ayant une deuxième fréquence optique, en ce que le milieu est adapté pour produire un effet de mélange à quatre ondes entre chaque impulsion à dérive de fréquence et les premier et deuxième signaux de pompe, et en ce que la demi-somme des première et deuxième fréquences optiques appartient au support du spectre des impulsions à dérive de fréquence.

Selon un mode de réalisation préféré du dispositif, objet de l'invention, la demi-somme des première et deuxième fréquences optiques coïncide approximativement avec le milieu du support du spectre des impulsions à dérive de fréquence.

De préférence, la moitié de l'écartement spectral entre les premier et deuxième signaux de pompe est inférieure ou égale à l'amplitude du support du spectre des impulsions à dérive de fréquence.

Dans la présente invention, le milieu adapté pour produire l'effet de mélange à quatre ondes est de préférence une fibre optique. Et cette fibre optique est de préférence une fibre microstructurée (en anglais, *photonic crystal fiber*).

Selon un premier mode de réalisation particulier de l'invention, les premier et deuxième signaux de pompe sont continus.

Selon un deuxième mode de réalisation particulier, au moins l'un des premier et deuxième signaux de pompe est impulsionnel.

En particulier, chacun des premier et deuxième signaux de pompe peut être impulsionnel.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement le principe de fonctionnement d'un amplificateur paramétrique optique connu, comportant une seule source de pompe, et a déjà été décrite,
- la figure 2 illustre schématiquement le principe de fonctionnement d'un amplificateur paramétrique optique connu, comportant deux sources de pompe, et a déjà été décrite,
- la figure 3 illustre schématiquement le principe de fonctionnement d'un mode de réalisation particulier du dispositif, objet de l'invention,
- les figures 4 à 6 illustrent schématiquement des simulations numériques d'un exemple de l'invention (figure 4 : spectres d'entrée et de sortie, figure 5 : évolution de la courbe de gain, et figure 6 : signal d'entrée avant étirement puis après étirement, amplification et recompression), et
- la figure 7 est une vue schématique d'un mode de réalisation particulier du dispositif, objet de l'invention.

### EXPOSÉ DÉTAILLÉ DE MODES DE RÉALISATION PARTICULIERS

La figure 3 illustre schématiquement le principe de fonctionnement d'un exemple du dispositif d'amplification paramétrique optique d'impulsions à dérive de fréquence, objet de l'invention, dans lequel on utilise encore deux sources de pompe et une fibre optique.

Sur la figure 3, on a encore porté la fréquence (optique) f en abscisse et la densité spectrale de puissance d en ordonnée (échelle logarithmique).

P1 désigne encore un premier signal de pompe, P2 un deuxième signal de pompe, fP1 la fréquence (optique) de P1, fP2 la fréquence (optique) de P2, B la bande de gain, M l'axe équidistant de P1 et P2, fM la fréquence (optique) correspondant à M, S le signal à amplifier, F la fibre optique, Sa le signal amplifié au cours de sa propagation dans la fibre et C l'onde complémentaire.

Dans l'exemple considéré, le signal d'entrée S (signal à dérive de fréquence) est placé au centre des deux pompes. Plus précisément, le spectre de S admet M comme axe de symétrie, et le support de ce spectre est inclus dans l'intervalle [fP1; fP2].

Ainsi, le milieu de ce support coïncide avec (fP1+fP2)/2. Le signal S chevauche donc les côtés de la bande de gain B qui sont habituellement réservés respectivement au signal et à l'onde complémentaire. On gagne donc dans ce cas un facteur 2 sur la bande de gain.

On voit aussi que le signal amplifié Sa et l'onde complémentaire C occupent tous deux un intervalle de fréquences ayant fM pour milieu.

Ainsi l'onde complémentaire se superpose au signal lors de l'amplification. Cependant, lors de la recompression (qui suit l'amplification), le signal amplifié est comprimé mais l'onde complémentaire ne l'est pas : au contraire elle est encore un peu plus étirée car sa dérive de fréquence est opposée à celle du signal amplifié.

En termes de phase (et en première approximation), lors de l'étirement, une phase ϕ est ajoutée au signal (et il n'y a pas d'onde complémentaire). Lors de l'amplification, le signal conserve cette phase ϕ et l'onde complémentaire apparaît, avec la phase -ϕ. Lors de la compression, la phase du signal diminue d'une valeur ϕ d'où un déphasage nul par rapport au signal avant étirement. La phase de l'onde complémentaire diminue également de cette valeur ϕ d'où un déphasage -2ϕ par rapport au signal.

L'onde complémentaire n'est donc pas comprimée et se traduit simplement par un bruit constitué par un piédestal du signal recomprimé.

On est donc capable d'amplifier une impulsion courte à dérive de fréquence en utilisant toute la bande passante du FOPCPA si l'on accepte un piédestal pour l'impulsion amplifiée et recomprimée.

Il convient de noter que l'utilisation de toute la bande passante permet l'amplification d'impulsions très courtes.

Afin de démontrer la faisabilité de l'invention, on a simulé le fonctionnement d'un amplificateur, qui est du genre de l'exemple décrit, à l'aide d'un modèle utilisant une équation de Schrödinger non-linéaire, modèle d'ailleurs validé dans le cas des impulsions à dérive de fréquence, lors d'expériences mettant en oeuvre une seule pompe - voir le document suivant :
**[4]** D. Bigourd, L. Lago, A. Kudlinski, E. Hugonnot et A. Mussot, « Dynamics of fiber optical parametric chirped pulse amplifiers », JOSA B, vol. 28, N°11, pp. 2848-2854 (2011**).**

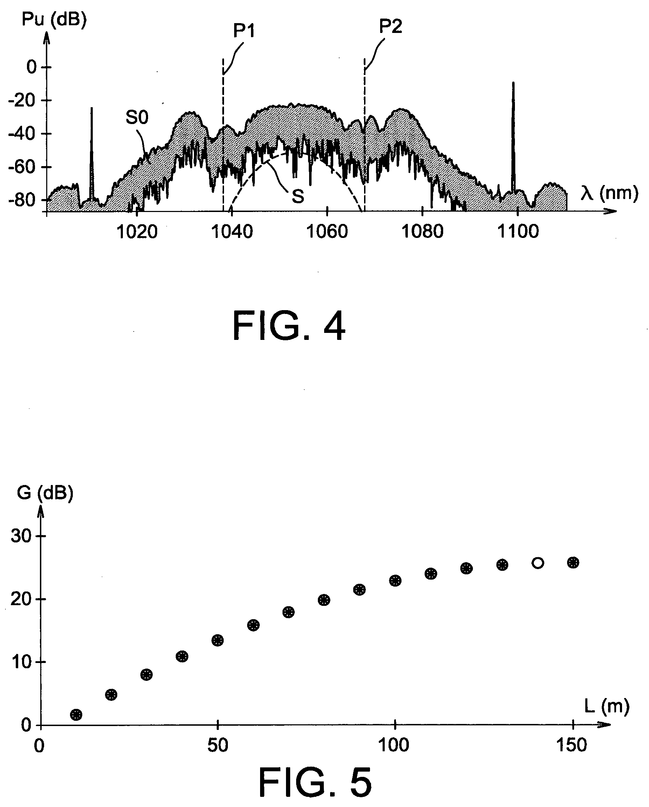

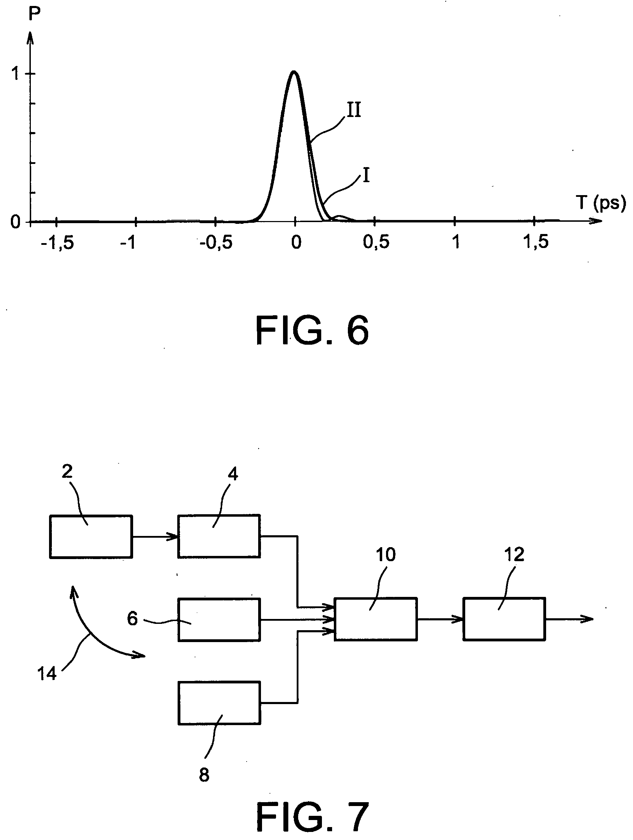

Les simulations numériques sont schématiquement illustrées par les figures 4 à 6. Sur les figures 4 et 6, les puissances ont été normalisées à 1 pour plus de clarté. On note ω_{c} la pulsation médiane entre les deux pompes : ω_{c}=π(fP1+fP2). Et l'on utilise une fibre optique pour laquelle :
- le coefficient non-linéaire γ vaut 9/W/km,
- le coefficient de dispersion du deuxième ordre β₂(ω_{c}) vaut -2,05x10⁻²⁹ s²/m,
- le coefficient de dispersion du troisième ordre β₃(ω_{c}) vaut 0,79x10⁻⁴⁰ s³/m,
- le coefficient de dispersion du quatrième ordre β₄(ω_{c}) vaut 2,5x10⁻⁵⁵ s⁴/m, et
- la puissance de chacun des deux signaux de pompe vaut 3W.

La figure 4 montre un exemple de spectre à l'entrée de la fibre (traits pointillés) pour un signal de 200 fs qui a été étiré jusqu'à 4,5 ns et qui est placé au centre des deux pompes. Ces dernières sont espacées l'une de l'autre de 8 THz. Les longueurs d'ondes λ (nm) sont portées en abscisse et les puissances Pu en ordonnée (20 dB par division).

Après propagation du signal dans la fibre (longueur supérieure à 150 m), on obtient le spectre de sortie SO. On constate que le signal est effectivement amplifié. De plus, après avoir filtré spectralement ce signal pour le séparer des signaux de pompe résiduels, on constate que le gain d'amplification en énergie vaut 26 dB.

L'évolution longitudinale de ce gain est représentée sur la figure 5. La longueur de fibre L(m) est portée en abscisse et le gain G(dB) en ordonnée. On constate que ce gain est quasiment exponentiel sur une première partie de la fibre et qu'ensuite il commence à saturer. Ce comportement est analogue à celui que l'on observe avec les systèmes à une seule pompe.

Sur la figure 6, on a porté le temps T(ps) en abscisse et la puissance P (unité arbitraire) en ordonnée. Le signal d'entrée avant étirement est représenté par la courbe I. La forme temporelle de ce signal après étirement, amplification et recompression est donnée par la courbe II.

On voit que le signal de sortie (II) est quasiment identique au signal d'entrée (I). Cela démontre qu'aucune phase parasite ne s'est ajoutée au cours du processus d'amplification.

En conclusion, le principal avantage de l'invention réside dans le fait qu'elle permet de multiplier par deux la largeur de la bande de gain d'un FOPCPA comportant deux pompes.

Il convient de noter qu'un FOPCPA à deux pompes n'avait jamais été divulgué et que l'utilisation des deux côtés de la bande de gain est originale : l'homme du métier serait porté, comme dans les configurations FOPA à deux pompes classiques, à n'utiliser que la moitié de cette bande de gain.

Certes, dans le cas d'un amplificateur paramétrique, il est connu d'injecter une onde à la fois du côté signal et du côté onde complémentaire lorsque l'on veut amplifier des signaux monochromatiques. On parle alors de configuration sensible à la phase. Une telle configuration est potentiellement capable d'amplifier sans bruit, mais nécessite un contrôle délicat de la phase de chacune des ondes considérées.

Dans le cas d'impulsions à dérive de fréquence qui sont par exemple positionnées au centre des deux pompes, les phases sont imposées par le dispositif d'étirement. Il est donc complètement contraire à l'intuition d'obtenir un gain significatif dans ce cas.

La figure 7 est une vue très schématique d'un mode de réalisation particulier du dispositif, objet de l'invention.

Il s'agit d'un FOPCPA comprenant :
- une source 2 d'impulsions lumineuses, qui est un oscillateur à blocage de modes dans l'exemple,
- un étireur 4 pour étirer temporellement les impulsions et fournir ainsi les impulsions à dérive de fréquence,
- une première source de pompe 6 qui fournit des signaux de pompe impulsionnels dont la fréquence optique est notée fP1,
- une deuxième source de pompe 8 qui fournit des signaux de pompe impulsionnels dont la fréquence optique est différente de fP2 et notée fP2,
- une fibre optique 10 qui reçoit les signaux de pompe fournis par les sources 6 et 8 et qui amplifie les impulsions à dérive de fréquence, en produisant un effet de mélange à quatre ondes entre celles-ci et les signaux de pompe.

Le dispositif est suivi par un compresseur 12 pour comprimer temporellement les impulsions amplifiées.

Les impulsions ainsi comprimées sont envoyées à un dispositif (non représenté) où elles sont utilisées.

La durée des impulsions avant l'étireur 4 est de l'ordre de 1 ns ou moins. Elle va typiquement de quelques femtosecondes à quelques picosecondes.

Les signaux de pompe impulsionnels, fournis par les sources 6 et 8, sont synchronisés avec les impulsions fournies par la source 2 à l'aide de moyens symbolisés par la double flèche 14 sur la figure 7. De tels moyens de synchronisation sont déjà connus pour les FOPA.

Dans une variante du dispositif représenté sur cette figure 7, seule l'une des deux sources 6 et 8 fournit des signaux de pompe impulsionnels. L'autre source fournit des signaux de pompe continus.

Dans une autre variante, chacune des deux sources 6 et 8 fournit des signaux de pompe continus. Dans ce cas, les moyens de synchronisation 14 ne sont pas utilisés.

Conformément à l'invention, (fP1+fP2)/2 appartient au support du spectre des impulsions à dérive de fréquence. Dans l'exemple considéré, (fP1+fP2)/2 coïncide avec le milieu de ce support, et |fP2-fP1|/2 (c'est-à-dire la moitié de l'écartement spectrale |fP2-fP1| est inférieur ou égal à l'amplitude de ce support.

Mais, de préférence, on fait en sorte que le support du spectre des impulsions utilise toute la bande spectrale d'amplification [fP2 ; fP2] (en supposant fP1 inférieur à fP2).

On précise que, connaissant les impulsions à amplifier, on ajuste la configuration du FOPCPA à ces impulsions. En d'autres termes, on choisit la fibre 10 et les sources de pompe 6 et 8 en fonction de ces impulsions. En pratique, les sources de pompe sont ajustables et sont ajustées aux impulsions à amplifier.

La fibre optique 10 est de préférence une fibre optique microstructurée, ce qui permet une plus grande liberté de conception de la fibre.

De plus, il est intéressant d'utiliser une fibre optique parce que des coefficients non linéaires très importants peuvent être obtenus avec elle et que l'on sait ajuster ses propriétés de dispersion. Mais on précise que la fibre 10 pourrait être remplacée par tout milieu non linéaire d'ordre 3, apte à produire un effet de mélange à quatre ondes entre les impulsions à dérive de fréquence et les signaux de pompe fournis par les sources 6 et 8.

## Revendications

1. Procédé d'amplification paramétrique optique d'impulsions à dérive de fréquence, utilisant un premier signal de pompe (P1), ayant une première fréquence optique (fP1), **caractérisé en ce qu'**on utilise un effet de mélange à quatre ondes entre chaque impulsion à dérive de fréquence, le premier signal de pompe et un deuxième signal de pompe (P2), ayant une deuxième fréquence optique (fP2), et **en ce que** la demi-somme des première et deuxième fréquences optiques (fP1, fP2) appartient au support du spectre des impulsions à dérive de fréquence.

2. Dispositif d'amplification paramétrique optique d'impulsions à dérive de fréquence, comprenant :
- une première source de pompe (6) pour fournir un premier signal de pompe, ayant une première fréquence optique,
- une source d'impulsions lumineuses (2),
- un étireur (4) pour étirer temporellement les impulsions lumineuses et fournir ainsi les impulsions à dérive de fréquence, et
- un milieu (10) pour amplifier les impulsions à dérive de fréquence,
**caractérisé en ce qu'**il comprend en outre une deuxième source de pompe (8) pour fournir un deuxième signal de pompe, ayant une deuxième fréquence optique, **en ce que** le milieu (10) est adapté pour produire un effet de mélange à quatre ondes entre chaque impulsion à dérive de fréquence et les premier et deuxième signaux de pompe, et **en ce que** la demi-somme des première et deuxième fréquences optiques (fP1, fP2) appartient au support du spectre des impulsions à dérive de fréquence.

3. Dispositif selon la revendication 2, dans lequel la demi-somme des première et deuxième fréquences optiques (fP1, fP2) coïncide approximativement avec le milieu du support du spectre des impulsions à dérive de fréquence.

4. Dispositif selon l'une quelconque des revendications 2 et 3, dans lequel la moitié de l'écartement spectral entre les premier et deuxième signaux de pompe (P1, P2) est inférieure ou égale à l'amplitude du support du spectre des impulsions à dérive de fréquence.

5. Dispositif selon l'une quelconque des revendications 2 à 4, dans lequel le milieu adapté pour produire l'effet de mélange à quatre ondes est une fibre optique (10).

6. Dispositif selon la revendication 5, dans lequel la fibre optique est une fibre microstructurée (10).

7. Dispositif selon l'une quelconque des revendications 2 à 6, dans lequel les premier et deuxième signaux de pompe sont continus.

8. Dispositif selon l'une quelconque des revendications 2 à 6, dans lequel au moins l'un des premier et deuxième signaux de pompe est impulsionnel.

9. Dispositif selon la revendication 8, dans lequel chacun des premier et deuxième signaux de pompe est impulsionnel.

## Patentansprüche

1. Verfahren zum parametrischen optischen Verstärken von Frequenzdrift-Impulsen unter Verwendung eines ersten Pumpsignals (P1), welches eine erste optische Frequenz (fP1) aufweist, **dadurch gekennzeichnet, dass** ein Vierwellen-Mischungseffekt zwischen jedem Frequenzdrift-Impuls, dem ersten Pumpsignal und einem zweiten Pumpsignal (P2), welches eine zweite optische Frequenz (fP2) aufweist, verwendet wird, und dass die Halbsumme der ersten und zweiten optischen Frequenzen (fP1, fP2) zum Träger des Spektrums der Frequenzdrift-Impulse gehört.

2. Vorrichtung zum parametrischen optischen Verstärken von Frequenzdrift-Impulsen, umfassend:
- eine erste Pumpquelle (6) zum Liefern eines ersten Pumpsignals, welches eine erste optische Frequenz aufweist,
- eine Licht-Impulsquelle (2),
- eine Dehneinrichtung (4) zum zeitlichen Dehnen der Lichtimpulse und somit zum Liefern von Frequenzdrift-Impulsen, und
- ein Medium (10) zum Verstärken der Frequenzdrift-Impulse,
**dadurch gekennzeichnet, dass** sie ferner eine zweite Pumpquelle (8) zum Liefern eines zweiten Pumpsignals, welches eine zweite optische Frequenz aufweist, umfasst, dass das Medium (10) dazu eingerichtet ist, einen Vierwellen-Mischungseffekt zwischen jedem Frequenzdrift-Impuls und den ersten und zweiten Pumpsignalen zu erzeugen, und dass die Halbsumme der ersten und zweiten optischen Frequenzen (fP1, fP2) zum Träger des Spektrums der Frequenzdrift-Impulse gehört.

3. Vorrichtung nach Anspruch 2, wobei die Halbsumme der ersten und zweiten optischen Frequenzen (fP1, fP2) annähend mit dem Medium des Trägers des Spektrums der Frequenzdrift-Impulse zusammenfällt.

4. Vorrichtung nach einem der Ansprüche 2 bis 3, wobei die Hälfte des spektralen Abstands zwischen den ersten und zweiten Pumpsignalen (P1, P2) kleiner oder gleich der Amplitude des Trägers des Spektrums der Frequenzdrift-Impulse ist.

5. Vorrichtung nach einem der Ansprüche 2 bis 4, wobei das zum Erzeugen des Vierwellen-Mischungseffekts eingerichtete Medium eine optische Faser (10) ist.

6. Vorrichtung nach Anspruch 5, wobei die optische Faser eine Mikrostrukturfaser (10) ist.

7. Vorrichtung nach einem der Ansprüche 2 bis 6, wobei die ersten und zweiten Pumpsignale kontinuierlich sind.

8. Vorrichtung nach einem der Ansprüche 2 bis 6, wobei wenigstens eines aus den ersten und zweiten Pumpsignalen impulsartig ist.

9. Vorrichtung nach Anspruch 8, wobei jedes der ersten und zweiten Pumpsignale impulsartig ist.

## Claims

1. Method for the optical parametric chirped pulse amplification, using a first pump signal (P1), having a first optical frequency (fP1), **characterised in that** a four-wave mixing effect is used between each chirped pulse, the first pump signal and a second pump signal (P2), having a second optical frequency (fP2), and **in that** the half-sum of the first and second optical frequencies (fP1, fP2) pertains to the support of the spectrum of the chirped pulses.

2. Device for the optical parametric chirped pulse amplification, comprising:
- a first pump source (6) for supplying a first pump signal, having a first optical frequency,
- a light pulse source (2),
- a stretcher (4) for temporally stretching the light pulses and thus supplying the chirped pulses, and
- a medium (10) for amplifying the chirped pulses,
**characterised in that** it further comprises a second pump source (8) for supplying a second pump signal, having a second optical frequency, **in that** the medium (10) is suitable for producing a four-wave mixing effect between each chirped pulse and the first and second pump signals, and **in that** the half-sum of the first and second optical frequencies (fP1, fP2) pertains to the support of the spectrum of the chirped pulses.

3. Device according to claim 2, wherein the half-sum of the first and second optical frequencies (fP1, fP2) coincides approximately with the midpoint of the support of the spectrum of the chirped pulses.

4. Device according to any of claims 2 and 3, wherein half of the spectral distance between the first and second pump signals (P1, P2) is less than or equal to the amplitude of the support of the spectrum of the chirped pulses.

5. Device according to any of claims 2 to 4, wherein the medium suitable for producing the four-wave mixing effect is an optical fibre (10).

6. Device according to claim 5, wherein the optical fibre is a photonic crystal fibre (10).

7. Device according to any of claims 2 to 6, wherein the first and second pump signals are continuous.

8. Device according to any of claims 2 to 6, wherein at least one of the first and second pump signals is pulsed.

9. Device according to claim 8, wherein each of the first and second pump signals is pulsed.
